# EUROPEAN PATENT SPECIFICATION

(11) **EP 4 685 875 B1**
(45) Date of publication and mention of the grant of the patent: **14.10.2026**
(21) Application number: 25190876.0
(22) Date of filing: 22.07.2025
(51) Int. Cl.: H01M 4/36, H01M 4/62, H01M 4/525, H01M 4/58, H01M 4/1391, H01M 10/052, H01M 10/0562, H01M 4/02

(54) **COMPOSITE CATHODE MATERIAL AND PREPARATION METHOD THEREOF, AND SOLID-STATE LITHIUM-ION BATTERY (SSLIB)**
VERBUNDKATHODENMATERIAL UND HERSTELLUNGSVERFAHREN DAFÜR SOWIE FESTKÖRPER-LITHIUM-IONEN-BATTERIE (SSLIB)
MATÉRIAU DE CATHODE COMPOSITE ET SON PROCÉDÉ DE PRÉPARATION, ET BATTERIE AU LITHIUM-ION À SEMI-CONDUCTEURS (SSLIB)

(30) Priority: 26.07.2024 CN 202411017119
(43) Date of publication of application: 28.01.2026
(73) Proprietor: Jilin Dongchi New Energy Technology Co., Ltd, Changchun City, Jilin Province 130000 (CN)
(72) Inventor: SUN, Liqun, Changchun City, Jilin Province, 130000 (CN); XIE, Haiming, Changchun City, Jilin Province, 130000 (CN); ZHU, Haoyuan, Changchun City, Jilin Province, 130000 (CN)
(74) Representative: Porta & Consulenti Associati S.p.A.

(56) References cited:
- CN-A- 108 899 479
- CN-A- 117 352 736
- ZHANG HONGWEI ET AL: "Hierarchically porous MXene decorated carbon coated LiFePO4 as cathode material for high-performance lithium-ion batteries", JOURNAL OF ALLOYS AND COMPOUNDS, ELSEVIER SEQUOIA, LAUSANNE, CH, vol. 876, 3 May 2021 (2021-05-03), XP086586171, ISSN: 0925-8388, [retrieved on 20210503], DOI: 10.1016/J.JALLCOM.2021.160210

## Description

### TECHNICAL FIELD

The present disclosure relates to the technical field of cathode materials for lithium batteries, and in particular relates to a composite cathode material and a preparation method thereof, and a solid-state lithium-ion battery (SSLIB).

### BACKGROUND

China is currently undergoing a critical period of transition from non-renewable energy sources such as coal, petroleum, and natural gas to renewable alternatives such as solar, nuclear, and electronic energy. Among these, lithium-ion batteries (LIBs) are one of the important pathways to replace traditional non-renewable fossil fuels due to their advantages such as high energy density, long cycle life, and environmental friendliness. However, for conventional liquid LIBs, side reactions are inevitable during charging/discharging cycles, due to the organic liquid electrolytes used in batteries transport lithium ions. Additionally, issues such as electrolyte volatilization and leakage may occur during battery operation. These problems not only cause irreversible decay in the discharge capacity of LIBs but also pose serious safety issues when certain flammable and explosive organic electrolytes leak.

As a variant of LIBs, solid-state lithium-ion batteries (SSLIBs) have garnered significant attention owing to their non-leakage, non-flammability, good mechanical properties, excellent electrochemical stability, high safety, and superior thermal stability. However, it is difficult for SSLIBs to achieve high-quality loading of cathode materials, and thus it is hard to realize their practical application for high energy density. This is because an increase in the loading amount will cause the thickness of the cathode sheet increase, and the side far from the electrolyte will be hindered and blocked by other particles when transporting lithium ions. This severely affects the stable output of lithium ions inside the cathode, resulting in only the cathode part in contact with the electrolyte being able to fully release lithium ions. Consequently, the specific discharge capacity of batteries reduces. Furthermore, an increase in the loading amount will cause a significant rise in charge/discharge currents, which indirectly accelerates the chemical side reactions between the cathode and the electrolyte. This promotes the formation of a cathode-electrolyte interphase (CEI) layer. A thicker CEI will lead to a decline in the battery performance and thereby shorten the battery's service life.

CN 117352736 A discloses a cobalt-based cathode material with a composite coating layer, a preparation method thereof, and a lithium-ion battery. The cobalt-based cathode material comprises a cobalt-based cathode material matrix and a composite coating layer covering the surface of the cobalt-based cathode material matrix, where the composite coating layer is composed of an MXene material and a fast ionic conductor material. CN 117352736 A uses the MXene material and the fast ionic conductor material to compositely coat the cobalt-based cathode material. While improving the conductivity and structural stability of the material, it further improves the lithium-ion diffusion coefficient of the material, stabilizes the material interface, and enables modification. The interface can form a more stable CEI film during the charge and discharge process, thereby reducing the interface impedance, providing high capacity, and reducing the metal dissolution content, making the material have excellent cycle performance.

To improve the above issues, modifying cathode materials by blending or coating them with fast lithium-ion conductors is an effective way to achieve high load capacity of solid-state batteries. The incorporated fast ionic conductors can not only establish rapid and stable lithium-ion transport channels to facilitate the transmission of lithium ions to the cathode but also the formed coating layers can protect the cathode material, enhancing the cycling stability of batteries. However, such modified SSLIBs lead to a decrease in the specific discharge capacity of batteries due to the reduction in the proportion of active materials. Moreover, they still face the issue of insufficient electronic conductivity of the cathode.

### SUMMARY

The present disclosure is intended to provide a composite cathode material and a preparation method thereof, and a solid-state lithium-ion battery (SSLIB). The composite cathode material provided by the present disclosure exhibits high ionic conductivity and high electronic conductivity. Furthermore, the LIB fabricated using this composite cathode material exhibits high discharge capacity and high cycling stability.

To achieve the above objects, the present disclosure provides the following technical solutions:

The present disclosure provides a composite cathode material, including a cathode active material and an MXene-coated fast ionic conductor, wherein
the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
a fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
an MXene in the MXene-coated fast ionic conductor is Ti₃C₂Tₓ, where Tₓ represents a functional group selected from the group consisting of -F, -O, and -OH.

In some embodiments, a mass ratio of the fast ionic conductor in the MXene-coated fast ionic conductor to the cathode active material is in a range of 0.01: 100 to 5: 100.

In some embodiments, a mass ratio of the MXene in the MXene-coated fast ionic conductor to the cathode active material is in a range of 0.01: 100 to 5: 100.

The present disclosure further provides a method for preparing the composite cathode material as described in the above technical solutions, including:
(1) mixing the fast ionic conductor and the MXene separately with an organic solvent to obtain a fast ionic conductor dispersion and an MXene dispersion;
(2) mixing the fast ionic conductor dispersion and the MXene dispersion obtained in step (1) to obtain a mixed solution; and
(3) mixing the cathode active material with the mixed solution obtained in step (2), and then drying to obtain the composite cathode material, wherein
   the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
   the fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
   the MXene in the MXene-coated fast ionic conductor is Ti₃C₂Tₓ, where Tₓ represents a functional group selected from the group consisting of -F, -O, and -OH.

In some embodiments, in step (1), the fast ionic conductor dispersion and the MXene dispersion independently have a mass concentration of 1 mg/mL to 100 mg/mL.

In some embodiments, the organic solvent in step (1) is selected from the group consisting of absolute ethanol, N-methylpyrrolidone (NMP), N,N-dimethylformamide (DMF), N,N-dimethylacetamide (DMA), and dimethyl sulfoxide (DMSO).

The present disclosure further provides a solid-state lithium-ion battery (SSLIB), where a cathode material in the SSLIB is the composite cathode material as described in the above technical solutions or the composite cathode material prepared by the method as described in the above technical solutions.

The present disclosure provides a composite cathode material, including a cathode active material and an MXene-coated fast ionic conductor, wherein the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂, a fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and an MXene in the MXene-coated fast ionic conductor is Ti₃C₂Tₓ, where Tₓ represents a functional group selected from the group consisting of -F, -O, and -OH. By introducing the fast ionic conductor into the cathode active material, the present disclosure utilizes the high lithium-ion conductivity of the fast ionic conductor to establish an efficient and stable ion transport network, thereby increasing the ionic transport capability of the cathode material. Simultaneously, coating the fast ionic conductor with the MXene having high electronic conductivity improves the electronic conductivity and specific discharge capacity of the composite cathode material. Furthermore, the functional atoms or groups (such as -F, -O, and -OH) present in MXene can prevent the corrosion of electrolytes, protect the cathode active material and significantly enhance the long-term cycling stability. Experimental results demonstrate that the composite cathode material provided by the present disclosure exhibits an ionic conductivity of 7.555×10⁻³ S/cm and an electronic conductivity of 4.761×10⁻⁵ S/cm, having high ionic conductivity and high electronic conductivity. The SSLIB fabricated with this composite cathode material exhibits a first-cycle specific discharge capacity of 211.22 mAh/g and a capacity retention of over 96% after 150 cycles at 0.5C, demonstrating high discharge capacity and cycling stability.

### BRIEF DESCRIPTION OF THE DRAWINGS

FIG. 1 shows a scanning electron microscopy (SEM) image of the LMN cathode sheet in Use Example 1 of the present disclosure.
FIG. 2 is a comparison diagram showing the first-cycle charge-discharge curves for the SSLIBs in Use Example 1 and Comparative Use Example 1 of the present disclosure.
FIG. 3 is a comparison diagram showing the rate performance for the SSLIBs in Use Example 1 and Comparative Use Example 1 of the present disclosure.
FIG. 4 is a comparison diagram showing the long-term cycling curves for the SSLIBs in Use Example 1 and Comparative Use Example 1 of the present disclosure.
FIG. 5 shows an SEM image of the LML cathode sheet in Use Example 2 of the present disclosure.
FIG. 6 is a comparison diagram showing the first-cycle charge-discharge curves for the SSLIBs in Use Example 2 and Comparative Use Example 2 of the present disclosure.
FIG. 7 is a comparison diagram showing the rate performance for the SSLIBs in Use Example 2 and Comparative Use Example 2 of the present disclosure.
FIG. 8 is a comparison diagram showing the long-term cycling curves for the SSLIBs in Use Example 2 and Comparative Use Example 2 of the present disclosure.

### DETAILED DESCRIPTION OF THE EMBODIMENTS

The present disclosure provides a composite cathode material, including a cathode active material and an MXene-coated fast ionic conductor, wherein.
the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
a fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
an MXene in the MXene-coated fast ionic conductor is Ti₃C₂Tₓ, where Tₓ represents a functional group selected from the group consisting of -F, -O, and -OH.

In the present disclosure, limiting the type of the cathode active material within the above range further increases the electronic conductivity of the composite cathode material.

In the present disclosure, limiting the type of the fast ionic conductor in the MXene-coated fast ionic conductor within the above range enables the composite cathode material to have an excellent ionic conductivity.

In some embodiments of the present disclosure, a mass ratio of the fast ionic conductor in the MXene-coated fast ionic conductor to the cathode active material is in a range of (0.01-5): 100, preferably (1-4): 100, and more preferably (2-3): 100. In the present disclosure, limiting the mass ratio of the fast ionic conductor in the MXene-coated fast ionic conductor to the cathode active material within the above ranges further improves the ionic conductivity of the composite cathode material.

In the present disclosure, the MXene increases the electronic conductivity of the composite cathode material.

In some embodiments of the present disclosure, a mass ratio of the MXene in the MXene-coated fast ionic conductor to the cathode active material is in a range of (0.01-5): 100, preferably (1-4): 100, and more preferably (1-2): 100. In the present disclosure, limiting the mass ratio of the MXene in the MXene-coated fast ionic conductor to the cathode active material within the above ranges further increases the electronic conductivity of the composite cathode material.

By introducing the fast ionic conductor into the cathode active material, the present disclosure utilizes the high lithium-ion conductivity of the fast ionic conductor to establish an efficient and stable ion transport network, thereby increasing an ionic transport capability of the cathode material. Simultaneously, coating the fast ionic conductor with the MXene having high electronic conductivity improves the electronic conductivity and specific discharge capacity of the composite cathode material. Furthermore, the functional atoms or groups (such as -F, -O, and -OH) present in MXene can prevent the corrosion of electrolytes, protect the cathode active material and significantly increase the long-term cycling stability.

The present disclosure further provides a method for preparing the composite cathode material as described in the above technical solutions, including the following steps:
(1) mixing the fast ionic conductor and the MXene separately with an organic solvent to obtain a fast ionic conductor dispersion and an MXene dispersion;
(2) mixing the fast ionic conductor dispersion and the MXene dispersion obtained in step (1) to obtain a mixed solution; and
(3) mixing the cathode active material with the mixed solution obtained in step (2), and then drying to obtain the composite cathode material, wherein
   the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
   the fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
   the MXene in the MXene-coated fast ionic conductor is Ti₃C₂Tₓ, where Tₓ represents a functional group selected from the group consisting of -F, -O, and -OH.

In the present disclosure, the fast ionic conductor and the MXene are mixed separately with an organic solvent to obtain a fast ionic conductor dispersion and an MXene dispersion.

In some embodiments of the present disclosure, the fast ionic conductor dispersion has a mass concentration of 1 mg/mL to 100 mg/mL, preferably 5 mg/mL to 50 mg/mL, and more preferably 5 mg/mL to 10 mg/mL. In some embodiments of the present disclosure, the MXene dispersion has a mass concentration of 1 mg/mL to 100 mg/mL, preferably 2 mg/mL to 50 mg/mL, and more preferably 2 mg/mL to 5 mg/mL. In the present disclosure, limiting the mass concentrations of the fast ionic conductor dispersion and the MXene dispersion within the above ranges enables more uniform dispersion of the fast ionic conductor and the MXene in the solvent and facilitates subsequent preparation of the composite cathode material.

In some embodiments of the present disclosure, the MXene is prepared by a process including the following steps:
(a) mixing LiF and concentrated hydrochloric acid to obtain a mixed solution 1;
(b) mixing Ti₃AlC₂ with the mixed solution 1 obtained in step (a), and subjecting a resulting mixed system to an etching reaction to obtain a mixed solution 2;
(c) subjecting the mixed solution 2 obtained in step (b) to centrifugation, acid washing, and water washing in sequence to obtain a precipitate; and
(d) mixing the precipitate obtained in step (c) with water, and subjecting a resulting mixture to sonication, centrifugation, and drying in sequence to obtain the MXene.

In some embodiments of the present disclosure, LiF and concentrated hydrochloric acid are mixed to obtain a mixed solution 1.

In some embodiments of the present disclosure, a ratio of a mass of the LiF to a volume of the concentrated hydrochloric acid is in a range of (1-1.6) g: (10-20) mL; a substance concentration of the concentrated hydrochloric acid is in a range of 8 mol/L to 9 mol/L. In the present disclosure, limiting the ratio of the mass of the LiF to the volume of the concentrated hydrochloric acid and the concentration of the concentrated hydrochloric acid within the above ranges ensures complete progression of subsequent reactions.

In some embodiments of the present disclosure, the mixing of the LiF and the concentrated hydrochloric acid is conducted in a polytetrafluoroethylene (PTFE) reactor; the mixing is conducted at room temperature; the mixing is conducted under stirring; the stirring is conducted at a speed of 450 rpm to 500 rpm; and the stirring is conducted for 15 min to 30 min. In the present disclosure, limiting the parameters of the mixing within the above ranges ensures the mixing of the materials more evenly.

In some embodiments of the present disclosure, after obtaining the mixed solution 1, Ti₃AlC₂ is mixed with the mixed solution 1 obtained in step (a), and a resulting mixed system is subjected to an etching reaction to obtain a mixed solution 2.

In some embodiments of the present disclosure, a ratio of a mass of the Ti₃AlC₂ to a volume of the mixed solution 1 is in a range of (1-2) g: (10-20) mL. In the present disclosure, limiting the ratio of the mass of the Ti₃AlC₂ to the volume of the mixed solution 1 within the above range ensures the obtained MXene with excellent performance.

In some embodiments of the present disclosure, the mixing of the Ti₃AlC₂ and the mixed solution 1 is conducted at a temperature of 40°C to 50°C; the mixing of the Ti₃AlC₂ and the mixed solution 1 is conducted under stirring; the stirring is conducted at a speed of 450 rpm to 500 rpm; and the stirring is conducted for 24 h to 48) h. In the present disclosure, setting the parameters of the mixing within the above ranges ensures the obtained MXene with excellent performance.

In some embodiments of the present disclosure, after obtaining the mixed solution 2, the mixed solution 2 is subjected to centrifugation, acid washing, and water washing in sequence to obtain a precipitate.

In some embodiments of the present disclosure, the centrifugation is conducted in a centrifuge; the centrifugation is conducted at a speed of 3,500 rpm to 5,000 rpm. In the present disclosure, the solid-liquid separation of the mixed solution 2 is realized by the centrifugation.

In some embodiments of the present disclosure, an acid used in the acid washing process is hydrochloric acid (HCl); the HCl has a concentration of 0.5 mol/L to 1 mol/L; the acid washing is conducted for 3 to 5 cycles; after each acid wash, a resulting acid washed product is subjected to centrifugation; the centrifugation is conducted at a speed of 3,500 rpm to 5,000 rpm; and the centrifugation is conducted for 5 min to 10 min. In some embodiments of the present disclosure, water used in the water washing is deionized water; the water washing is conducted for 5 to 10 cycles; after each water wash, a resulting water washed product is subjected to centrifugation; the centrifugation is conducted at a speed of 3,500 rpm to 5,000 rpm; and the centrifugation is conducted for 5 min to 10 min. In the present disclosure, the acid washing and the water washing thoroughly remove impurities and residual acid from the precipitate.

In some embodiments of the present disclosure, after obtaining the precipitate, the precipitate is mixed with water, and a resulting mixture is subjected to sonication, centrifugation, and drying in sequence to obtain the MXene.

In some embodiments of the present disclosure, the sonication is conducted in an ice-water bath; and the sonication is conducted for 1 h to 1.5 h. In the present disclosure, the sonication exfoliates the precipitate to obtain a monolayer/few-layer MXene.

In some embodiments of the present disclosure, the centrifugation is conducted at a speed of 3,500 rpm to 5,000 rpm; and the centrifugation is conducted for 1 h to 1.5 h. In the present disclosure, the centrifugation thoroughly removes the precipitate to obtain a monolayer/few-layer MXene dispersion.

In some embodiments of the present disclosure, the drying is conducted by freeze-drying.

The MXene prepared by the above method exhibits a monolayer/few-layer structure, significantly increasing the electronic conductivity of the composite cathode material.

In some embodiments of the present disclosure, the organic solvent is selected from the group consisting of absolute ethanol, NMP, DMF, DMA, and DMSO. In the present disclosure, limiting the types of the organic solvent within the above range ensures the complete volatilization of the organic solvent at low temperatures during the drying of the composite cathode material, avoiding the decomposition of the MXene.

In some embodiments of the present disclosure, the mixing of the fast ionic conductor and the MXene separately with the organic solvent is conducted by sonication; the sonication for each component is independently conducted for 5 min to 10 min; and the sonication is conducted in an ice-water bath. In the present disclosure, the fast ionic conductor dispersion and the MXene dispersion can be obtained by the sonication.

In the present disclosure, after obtaining the fast ionic conductor dispersion and the MXene dispersion, the fast ionic conductor dispersion and the MXene dispersion are mixed to obtain a mixed solution.

In some embodiments of the present disclosure, the mixing the fast ionic conductor dispersion and MXene dispersion is conducted by sonication; the sonication is conducted for 30 min to 60 min; and the sonication is conducted in an ice-water bath.

In some embodiments of the present disclosure, during the sonication manual agitation is conducted every 5 min to 10 min. In the present disclosure, the manual agitation prevents part solid sedimentation and promotes more uniform dispersion of the mixed solution. In the present disclosure, through this secondary mixing process, a compositionally homogeneous mixture is achieved, enabling the MXene to encapsulate the fast ionic conductor.

In the present disclosure, after obtaining the mixed solution, the cathode active material is mixed with the mixed solution, and then dried to obtain the composite cathode material.

In the present disclosure, the mixing of the the cathode active material with the mixed solution is conducted by stirring; and the stirring is conducted for 1 h to 5 h. In the present disclosure, the stirring ensures homogeneous mixing of the cathode active material with the mixed solution.

In some embodiments of the present disclosure, the drying is conducted by vacuum drying; the drying is conducted at a temperature of 30°C to 120°C, preferably 40°C to 100°C, and more preferably 50°C. In the present disclosure, the drying removes the organic solvent, obtaining the composite cathode material.

In the present disclosure, by separately preparing the fast ionic conductor dispersion and the MXene dispersion and mixing them, the fast ionic conductor is uniformly coated with the MXene, further increasing the electronic conductivity of the composite cathode material, thereby improving the discharge capacity and cycling stability of all-solid-state lithium-ion batteries fabricated with this material.

The present disclosure further provides a solid-state lithium-ion battery (SSLIB), where a cathode material in the SSLIB is the composite cathode material as described in the above technical solutions or the composite cathode material prepared by the method as described in the above technical solutions.

The technical solutions of the present disclosure will be clearly and completely described below with reference to the examples of the present disclosure. Apparently, the described examples are merely a part rather than all of the examples of the present disclosure.

### Example 1

A composite cathode material was composed of LiNi_{0.6}Co_{0.2}Mn_{0.2}O₂ (NCM622) and MXene-coated Li_{6.4}La₃Zr_{1.4}Ta_{0.6}O₁₂ (LLZTO). A mass ratio of the Li_{6.4}La₃Zr_{1.4}Ta_{0.6}O₁₂ to the the LiNi_{0.6}Co_{0.2}Mn_{0.2}O₂ was 2: 100. A mass ratio of an MXene in the MXene-coated Li_{6.4}La₃Zr_{1.4}Ta_{0.6}O₁₂ to the LiNi_{0.6}Co_{0.2}Mn_{0.2}O₂ was 1: 100.

The MXene was prepared by a process composed of the following steps:
(a) LiF and concentrated hydrochloric acid were mixed in a PTFE reactor at 500 rpm and room temperature for 20 min to obtain a mixed solution 1. A ratio of a mass of the LiF to a volume of the concentrated hydrochloric acid was 1.6 g: 20 mL. The concentrated hydrochloric acid had a substance concentration of 9 mol/L.
(b) Ti₃AlC₂ was mixed with the mixed solution 1 obtained in step (a) at 500 rpm and 50°C for 48 h. A resulting mixed system was subjected to an etching reaction to obtain a mixed solution 2. A ratio of a mass of the Ti₃AlC₂ to a volume of the mixed solution 1 was 1 g: 20 mL.
(c) The mixed solution 2 obtained in step (b) was centrifuged in a centrifuge at 3,500 rpm to separate a solid. The solid was acid washed 3 times with 1 mol/L dilute hydrochloric acid. After each acid wash, a resulting acid washed product was centrifuged at 3,500 rpm for 5 min. A resulting product was followed by water washed 5 times with deionized water. After each water wash, a resulting water washed product was centrifuged at 3,500 rpm for 5 min to obtain a precipitate.
(d) The precipitate obtained in step (c) was mixed with water, then sonicated in an ice-water bath for 1 h, and then centrifuged at 3,500 rpm for 1 h to obtain an MXene dispersion. The dispersion was freeze-dried to obtain an MXene.

The composite cathode material was prepared by a process composed of the following steps:
(1) The Li_{6.4}La₃Zr_{1.4}Ta_{0.6}O₁₂ (LLZTO) and the MXene were separately mixed with absolute ethanol via sonication in an ice-water bath for 10 min to obtain a Li_{6.4}La₃Zr_{1.4}Ta_{0.6}O₁₂ (LLZTO) dispersion and an MXene dispersion, wherein the Li_{6.4}La₃Zr_{1.4}Ta_{0.6}O₁₂ (LLZTO) dispersion had a mass concentration of 6.67 mg/mL, and the MXene dispersion had a mass concentration of 3.33 mg/mL.
(2) The Li_{6.4}La₃Zr_{1.4}Ta_{0.6}O₁₂ (LLZTO) dispersion and the MXene dispersion obtained in step (1) were mixed via sonication in an ice-water bath for 30 min. A resulting mixed system was subjected to manual agitation every 5 min to obtain a mixed solution.
(3) The LiNi_{0.6}Co_{0.2}Mn_{0.2}O₂ (NCM622) was stirred with the mixed solution obtained in step (2) for 3 h, and then dried in a vacuum oven at 50°C to obtain a composite cathode material, labeled as LMN.

### Example 2

Example 2 differed from Example 1 only in that the cathode active material was LiFePO₄ (LFP). All other conditions were identical to Example 1, obtaining a composite cathode material labeled LML.

### Example 3

Example 3 differed from Example 1 only in that the cathode active material was LiNi_{0.8}Co_{0.1}Mn_{0.1}O₂ (NCM811). All other conditions remained identical to Example 1.

### Example 4

Example 4 differed from Example 1 only in that the fast ionic conductor in the MXene-coated fast ionic conductor was Li_{1.4}Al_{0.4}Ti_{1.6}(PO₄)₃ (LATP). All other conditions matched Example 1.

### Example 5

Example 5 differed from Example 2 only in that the fast ionic conductor in the MXene-coated fast ionic conductor was Li_{1.4}Al_{0.4}Ti_{1.6}(PO₄)₃ (LATP). All other conditions were identical to Example 2.

### Example 6

Example 6 differed from Example 3 only in that the fast ionic conductor in the MXene-coated fast ionic conductor was Li_{1.4}Al_{0.4}Ti_{1.6}(PO₄)₃ (LATP). All other conditions corresponded to Example 3.

### Example 7

Example 7 differed from Example 1 only in that the fast ionic conductor in the MXene-coated fast ionic conductor was Li₂AlZr(PO₄)₃ (LAZP). All other conditions replicated Example 1.

### Example 8

Example 8 differed from Example 2 only in that the fast ionic conductor in the MXene-coated fast ionic conductor was Li₂AlZr(PO₄)₃ (LAZP). All other conditions followed Example 2.

### Example 9

Example 9 differed from Example 3 only in that the fast ionic conductor in the MXene-coated fast ionic conductor was Li₂AlZr(PO₄)₃ (LAZP). All other conditions mirrored Example 3.

### Example 10

Example 10 differed from Example 1 in that in step (1), the absolute ethanol was replaced with NMP; and in step (3), the drying was conducted at 120°C.

### Example 11

Example 11 differed from Example 1 in that in step (1), the absolute ethanol was replaced with DMF; and in step (3), the drying was conducted at 70°C.

### Example 12

Example 12 differed from Example 1 in that in step (1), the absolute ethanol was replaced with DMA; and in step (3), the drying was conducted at 70°C.

### Use Examples 1 to 12

### SSLIBs were fabricated as follows:

The composite cathode materials in Examples 1 to 12 were mixed separately with Super P and polyvinylidene fluoride (PVDF) at a mass ratio of 8: 1: 1 in NMP, and stirred for 12 h to obtain cathode slurries. Each cathode slurry was uniformly coated onto an aluminum foil using a doctor blade and dried in a vacuum oven at 120°C for 12 h until the solvent was fully removed. Circular LMN cathode sheets with a diameter of 13 mm were cut using a cutting knife.

2025-type button SSLIBs were assembled in a glove box in an argon atmosphere. Cathode in the SSLIB was the LMN cathode sheet; electrolyte was poly(vinylidene fluoride-co-hexafluoropropylene) (PVDF-HFP) electrolyte; and anode was a lithium metal foil.

### Comparative Use Example 1

Comparative Use Example 1 differed from Use Example 1 only in that the cathode material in the cathode sheet was LiNi_{0.6}Co_{0.2}Mn_{0.2}O₂ (NCM622). All other conditions followed Use Example 1.

### Comparative Use Example 2

Comparative Use Example 2 differed from Use Example 2 only in that the cathode material in the cathode sheet was LiFePO₄ (LFP). All other conditions followed Use Example 2.

The ionic conductivity and electronic conductivity of the composite cathode materials were tested using an electrochemical workstation.

The micro-morphology of composite cathode sheets was observed using a scanning electron microscopy (SEM, SU8000) with a working voltage of 3 kV.

Charge-discharge process, long-term cycling performance, and rate performance of the 2025-type button batteries were tested using a NEWARE battery testing system; charge-discharge voltage window was set to 2.8-4.3 V; current density for the long-cycle test was set to 0.1 C; and current densities for the rate performance test were respectively set to 0.1 C, 0.2 C, 0.3 C, 0.5 C, 1 C, and 2 C. All tests were conducted at 25°C.

Electrochemical impedance spectroscopy (EIS) test of the 2025-type button batteries was conducted over a frequency range of 0.01-100 kHz with a perturbation amplitude of 10 mV.

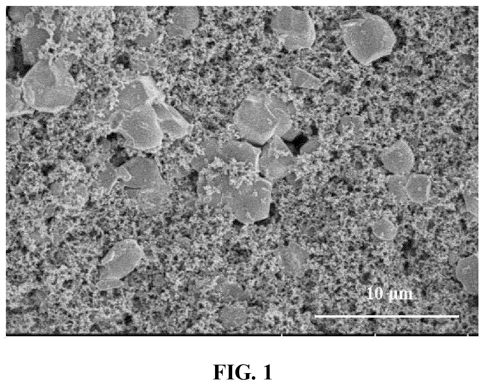

The SEM image of the LMN cathode sheet in Use Example 1 is shown in FIG. 1. It can be seen from FIG. 1 that the MXene-coated LLZTO is uniformly distributed in the cathode, successfully filling the gaps between the cathode particles.

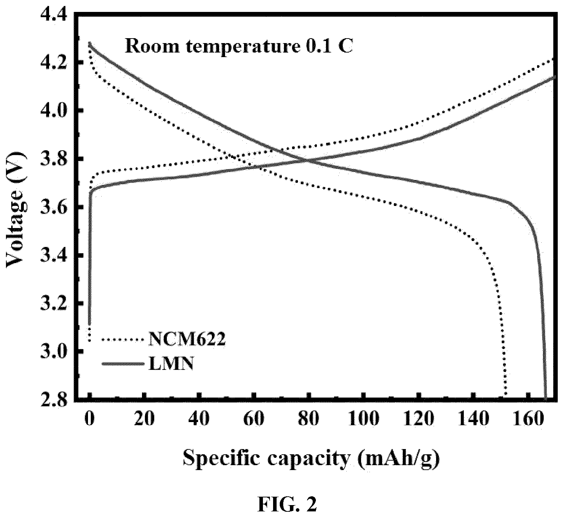

The comparison diagram showing the first-cycle charge-discharge curves for the LIBs in Use Example 1 and Comparative Use Example 1 is shown in FIG. 2. It can be seen from FIG. 2 that the LIB prepared with the LMN cathode sheet has a first-cycle charge-discharge specific capacity of 166.4 mAh/g, while the LIB prepared with the LiNi_{0.6}Co_{0.2}Mn_{0.2}O₂ (NCM622) cathode sheet has a first-cycle charge-discharge specific capacity of 151.9 mAh/g.

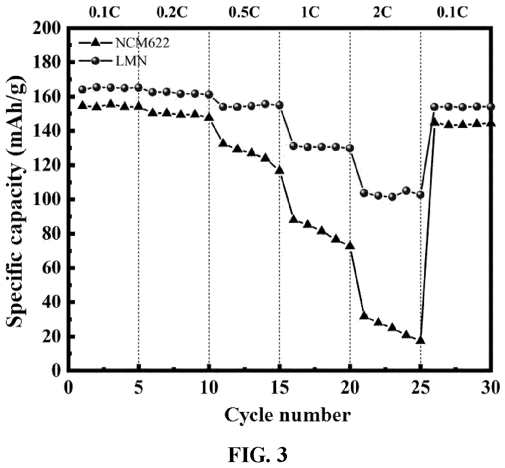

The comparison diagram showing the rate performance for the LIBs in Use Example 1 and Comparative Use Example 1 is shown in FIG. 3. It can be seen from FIG. 3 that LMN still exhibits a good capacity retention at high rates compared to LiNi_{0.6}Co_{0.2}Mn_{0.2}O₂ (NCM622).

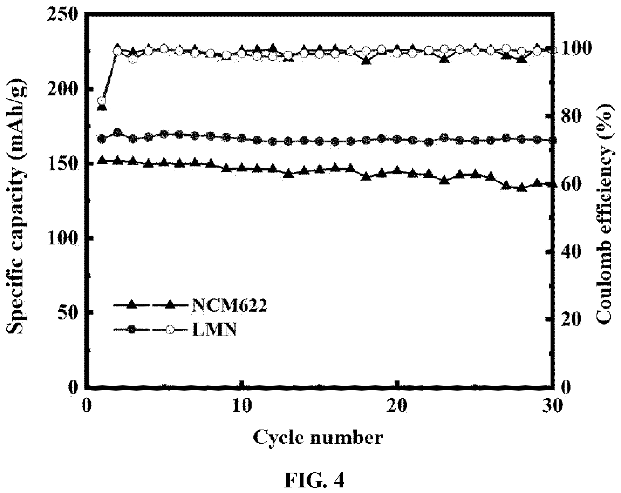

The comparison diagram showing the long-term cycling curves for the LIBs in Use Example 1 and Comparative Use Example 1 is shown in FIG. 4. It can be seen from FIG. 4 that the loadings of the LIBs in Use Example 1 and Comparative Use Example 1 are 8.5 mg/cm², LMN still exhibits a good capacity retention after 30 cycles at 0.1 C, while LiNi_{0.6}Co_{0.2}Mn_{0.2}O₂ (NCM622) exhibits a capacity retention decaying to 90% of its initial capacity after 30 cycles at 0.1 C.

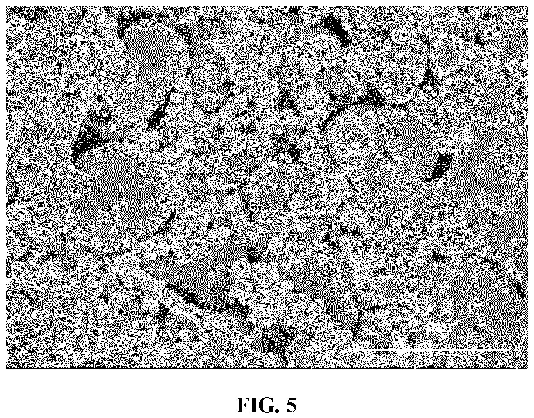

The SEM image of the LML cathode sheet in Use Example 2 is shown in FIG. 5. It can be seen from FIG. 5 that the MXene-coated LLZTO is uniformly distributed in the cathode, successfully filling the gaps between the cathode particles.

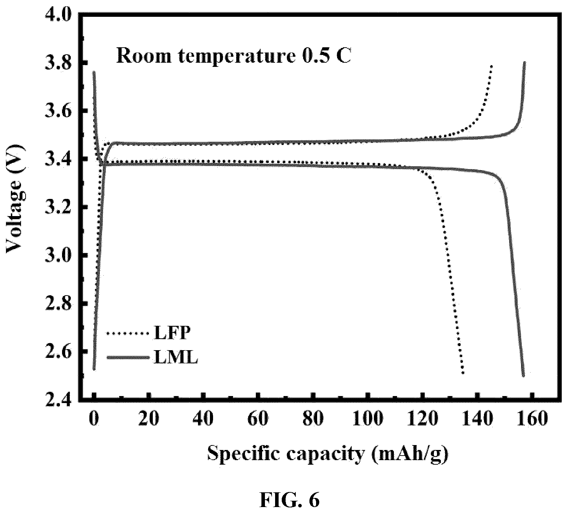

The comparison diagram showing the first-cycle charge-discharge curves for the LIBs in Use Example 2 and Comparative Use Example 2 is shown in FIG. 6. It can be seen from FIG. 6 that the LIB prepared with the LML cathode sheet has a first-cycle charge-discharge specific capacity of 156.6 mAh/g, while the LIB prepared with the LiFePO₄ (LFP) cathode sheet has a first-cycle charge-discharge specific capacity of 134.9 mAh/g.

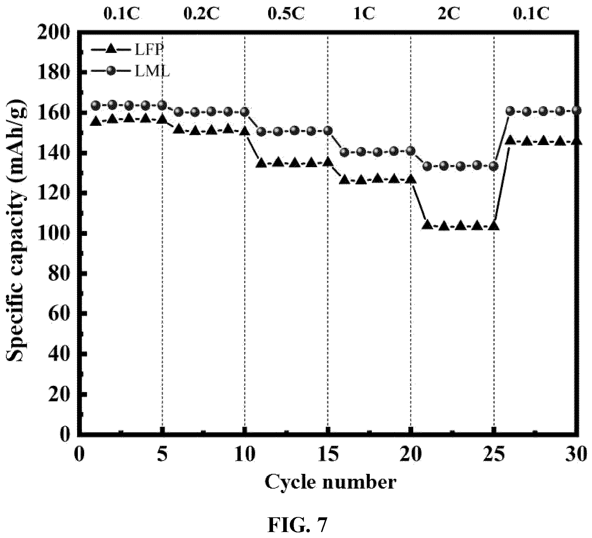

The comparison diagram showing the rate performance for the LIBs in Use Example 2 and Comparative Use Example 2 is shown in FIG. 7. It can be seen from FIG. 7 that LML exhibits a higher capacity retention at high rates compared to LiFePO₄ (LFP).

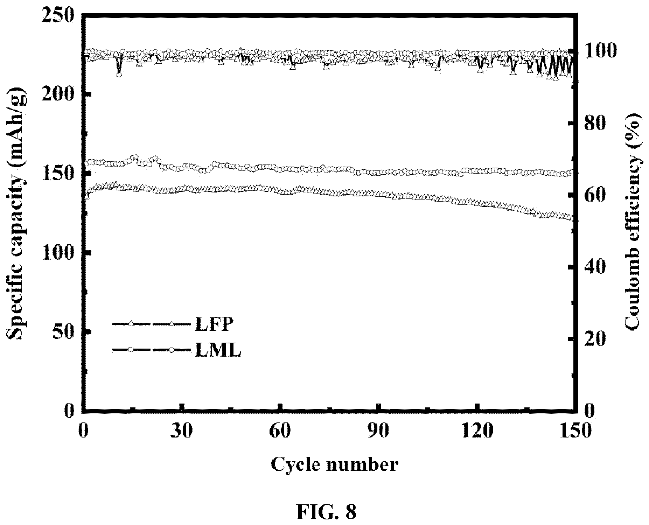

The comparison diagram showing the long-term cycling curves for the LIBs in Use Example 2 and Comparative Use Example 2 is shown in FIG. 8. It can be seen from FIG. 8 that the loadings of the LIBs in Use Example 2 and Comparative Use Example 2 are 10 mg/cm², LML has a capacity retention of 96% after 150 cycles at 0.1 C, while LiFePO₄ (LFP) has a capacity retention of 88%.

The data of the ionic conductivity and electronic conductivity of the composite cathode materials in Examples 1 to 12 are shown in Table 1.

**Table 1 Data of the ionic conductivity and electronic conductivity of the composite cathode materials in Examples 1 to 12**

| Example | Ionic conductivity (S/cm) | Electronic conductivity (S/cm) |
|---|---|---|
| Example 1 | 4.564×10⁻³ | 4.442×10⁻⁵ |
| Example 2 | 6.112×10⁻⁵ | 3.984×10⁻⁷ |
| Example 3 | 7.124×10⁻³ | 4.122×10⁻⁵ |
| Example 4 | 4.283×10⁻³ | 4.313×10⁻⁵ |
| Example 5 | 5.946×10⁻⁵ | 3.833×10⁻⁷ |
| Example 6 | 7.434×10⁻³ | 4.266×10⁻⁵ |
| Example 7 | 4.398×10⁻³ | 4.135×10⁻⁵ |
| Example 8 | 6.314×10⁻⁵ | 4.065×10⁻⁷ |
| Example 9 | 7.555×10⁻³ | 4.761×10⁻⁵ |
| Example 10 | 4.386×10⁻³ | 4.141×10⁻⁵ |
| Example 11 | 4.125×10⁻³ | 4.256×10⁻⁵ |
| Example 12 | 4.453×10⁻³ | 4.153×10⁻⁵ |

The data of the first-cycle specific discharge capacity and capacity retention after 50 cycles at 0.1 C for the SSLIBs in Use Examples 3 to 12 are shown in Table 2.

**Table 2 Data of the first-cycle specific discharge capacity and capacity retention after 50 cycles at 0.1 C for the SSLIBs in Use Examples 3 to 12**

| Use Example | First-cycle specific discharge capacity (mAh/g) | Capacity retention (%) |
|---|---|---|
| Use Example 3 | 203.15 | 98.12 |
| Use Example 4 | 161.31 | 99.50 |
| Use Example 5 | 153.28 | 99.75 |
| Use Example 6 | 211.22 | 99.31 |
| Use Example 7 | 165.80 | 98.88 |
| Use Example 8 | 150.87 | 99.18 |
| Use Example 9 | 207.32 | 98.56 |
| Use Example 10 | 164.90 | 99.34 |
| Use Example 11 | 167.52 | 98.96 |
| Use Example 12 | 163.22 | 98.55 |

The composite cathode materials provided by the present disclosure exhibit an ionic conductivity up to 7.555×10⁻³ S/cm and an electronic conductivity up to 4.761×10⁻⁵ S/cm, having high ionic conductivity and electronic conductivity. The SSLIBs fabricated with these composite cathode materials exhibit a first-cycle specific discharge capacity up to 211.22 mAh/g and a capacity retention reaching over 96% after 150 cycles at 0.5 C, demonstrating high discharge capacity and cycling stability.

## Claims

1. A composite cathode material, comprising a cathode active material and an MXene-coated fast ionic conductor,
wherein the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
a fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
an MXene in the MXene-coated fast ionic conductor is Ti₃C₂Tₓ, where Tₓ represents a functional group selected from the group consisting of -F, -O and -OH.

2. The composite cathode material of claim 1, wherein a mass ratio of the fast ionic conductor in the MXene-coated fast ionic conductor to the cathode active material is in a range of 0.01: 100 to 5: 100.

3. The composite cathode material of claim 1 or 2, wherein a mass ratio of the MXene in the MXene-coated fast ionic conductor to the cathode active material is in a range of 0.01: 100 to 5: 100.

4. A method for preparing the composite cathode material of any one of claims 1 to 3, comprising
(1) mixing the fast ionic conductor and the MXene separately with an organic solvent to obtain a fast ionic conductor dispersion and an MXene dispersion;
(2) mixing the fast ionic conductor dispersion and the MXene dispersion obtained in step (1) to obtain a mixed solution; and
(3) mixing the cathode active material with the mixed solution obtained in step (2), and then drying to obtain the composite cathode material,
wherein the cathode active material is selected from the group consisting of LiFePO₄, LiNi_{0.5}Co_{0.3}Mn_{0.2}O₂, LiNi_{0.6}Co_{0.2}Mn_{0.2}O₂, and LiNi_{0.8}Co_{0.1}Mn_{0.1}O₂,
the fast ionic conductor in the MXene-coated fast ionic conductor is selected from the group consisting of Li_{6.4}La₃Zr_{1.4}Ta_{0.6}O₁₂, Li₃PO₄, Li_{1.4}Al_{0.4}Ti_{1.6}(PO₄)₃, LiTi_{0.5}Zr_{1.5}(PO₄)₃, and Li₂AlZr(PO₄)₃, and
the MXene in the MXene-coated fast ionic conductor is Ti₃C₂Tₓ, where Tₓ represents a functional group selected from the group consisting of -F, -O and -OH.

5. The method of claim 4, wherein in step (1), the fast ionic conductor dispersion and the MXene dispersion independently have a mass concentration of 1 mg/mL to 100 mg/mL.

6. The method of claim 4 or 5, wherein the organic solvent in step (1) is selected from the group consisting of absolute ethanol, N-methylpyrrolidone (NMP), N,N-dimethylformamide (DMF), N,N-dimethylacetamide (DMA), and dimethyl sulfoxide (DMSO).

7. A solid-state lithium-ion battery (SSLIB), wherein a cathode material in the SSLIB is the composite cathode material of any one of claims 1 to 3 or the composite cathode material prepared by the method of any one of claims 4 to 6.

## Patentansprüche

1. Verbundkathodenmaterial, umfassend ein aktives Kathodenmaterial und einen mit MXen beschichteten schnellen Ionenleiter,
wobei das aktive Kathodenmaterial aus der Gruppe ausgewählt ist, bestehend aus LiFePO₄, LiNi_{0,5}Co_{0,3}Mn_{0,2}O₂, LiNi_{0,6}Co_{0,2}Mn_{0,2}O₂ und LiNi_{0,8}Co_{0,1}Mn_{0,1}O₂,
ein schneller Ionenleiter in dem mit MXen beschichteten schnellen Ionenleiter aus der Gruppe ausgewählt ist, bestehend aus Li_{6,4}La₃Zr_{1,4}Ta_{0,6}O₁₂, Li₃PO₄, Li_{1,4}Al_{0,4}Ti_{1,6}(PO₄)₃, LiTi_{0,5}Zr_{1,5}(PO₄)₃ und Li₂AlZr(PO₄)₃, und
es sich bei einem MXen in dem mit MXen beschichteten schnellen Ionenleiter um Ti₃C₂Tₓ handelt, wobei Tₓ eine funktionelle Gruppe darstellt, die aus der Gruppe ausgewählt ist, die aus -F, -O und -OH besteht.

2. Verbundkathodenmaterial nach Anspruch 1, wobei das Massenverhältnis des schnellen Ionenleiters in dem mit MXen beschichteten schnellen Ionenleiter zum aktiven Kathodenmaterial in einem Bereich von 0,01: 100 bis 5: 100 liegt.

3. Verbundkathodenmaterial nach Anspruch 1 oder 2, wobei das Massenverhältnis des MXen im mit MXen beschichteten schnellen Ionenleiter zum aktiven Kathodenmaterial im Bereich von 0,01: 100 bis 5: 100 liegt.

4. Verfahren zum Herstellen des Kathodenverbundmaterials nach einem der Ansprüche 1 bis 3, umfassend
(1) Mischen des schnellen Ionenleiters und des MXens getrennt voneinander mit einem organischen Lösungsmittel, um eine Dispersion des schnellen Ionenleiters und eine MXen-Dispersion zu erhalten;
(2) Mischen der in Schritt (1) erhaltenen Dispersion des schnellen Ionenleiters und der MXen-Dispersion, um eine gemischte Lösung zu erhalten; und
(3) Mischen des aktiven Kathodenmaterials mit der in Schritt (2) erhaltenen gemischten Lösung und anschließendes Trocknen, um das Kathodenverbundmaterial zu erhalten,
wobei das aktive Kathodenmaterial aus der Gruppe ausgewählt ist, bestehend aus LiFePO₄, LiNi_{0,5}Co_{0,3}Mn_{0,2}O₂, LiNi_{0,6}Co_{0,2}Mn_{0,2}O₂ und LiNi_{0,8}Co_{0,1}Mn_{0,1}O₂,
der schnelle Ionenleiter in dem mit MXen beschichteten schnellen Ionenleiter aus der Gruppe ausgewählt ist, bestehend aus Li_{6,4}La₃Zr_{1,4}Ta_{0,6}O₁₂, Li₃PO₄, Li_{1,4}Al_{0,4}Ti_{1,6}(PO₄)₃, LiTi_{0,5}Zr_{1,5}(PO₄)₃ und Li₂AlZr(PO₄)₃, und
es sich bei dem MXen in dem mit MXen beschichteten schnellen Ionenleiter um Ti₃C₂Tₓ handelt, wobei Tₓ eine funktionelle Gruppe darstellt, die aus der Gruppe ausgewählt ist, die aus -F, -O und -OH besteht.

5. Verfahren nach Anspruch 4, wobei in Schritt (1) die Dispersion des schnellen Ionenleiters und die MXen-Dispersion unabhängig voneinander eine Massenkonzentration von 1 mg/ml bis 100 mg/ml aufweisen.

6. Verfahren nach Anspruch 4 oder 5, wobei das organische Lösungsmittel in Schritt (1) aus der Gruppe ausgewählt ist, die aus absolutem Ethanol, *N*-Methylpyrrolidon (NMP), *N*,*N-*Dimethylformamid (DMF), *N*,*N*-Dimethylacetamid (DMA) und Dimethylsulfoxid (DMSO) besteht.

7. Festkörper-Lithium-Ionen-Batterie (SSLIB), wobei ein Kathodenmaterial in der SSLIB das Verbundkathodenmaterial nach einem der Ansprüche 1 bis 3 oder das nach dem Verfahren nach einem der Ansprüche 4 bis 6 hergestellte Verbundkathodenmaterial ist.

## Revendications

1. Matériau de cathode composite, comprenant un matériau actif de cathode et un conducteur ionique rapide revêtu d'un MXène,
dans lequel le matériau actif de cathode est sélectionné parmi le groupe consistant en LiFePO₄, LiNi_{0,5}Co_{0,3}Mn_{0,2}O₂, LiNi_{0,6}Co_{0,2}Mn_{0,2}O₂, et LiNi_{0,8}Co_{0,1}Mn_{0,1}O₂,
un conducteur ionique rapide dans le conducteur ionique rapide revêtu d'un MXène est sélectionné parmi le groupe consistant en Li_{6,4}La₃Zr_{1,4}Ta_{0,6}O₁₂, Li₃PO₄, Li_{1,4}Al_{0,4}Ti_{1,6}(PO₄)₃, LiTi_{0,5}Zr_{1,5}(PO₄)₃, et Li₂AlZr(PO₄)₃, et
un MXène dans le conducteur ionique rapide revêtu d'un MXène est Ti₃C₂Tₓ, où Tₓ représente un groupe fonctionnel sélectionné parmi le groupe consistant en -F, -O et -OH.

2. Matériau de cathode composite selon la revendication 1, dans lequel un rapport massique du conducteur ionique rapide dans le conducteur ionique rapide revêtu d'un MXène sur le matériau actif de cathode est dans une plage de 0,01: 100 à 5: 100.

3. Matériau de cathode composite selon la revendication 1 ou 2, dans lequel un rapport massique du MXène dans le conducteur ionique rapide revêtu d'un MXène sur le matériau actif de cathode est dans une plage de 0,01: 100 à 5: 100.

4. Procédé de préparation du matériau de cathode composite selon l'une quelconque des revendications 1 à 3, comprenant
(1) le mélange du conducteur ionique rapide et du MXène séparément avec un solvant organique pour obtenir une dispersion de conducteur ionique rapide et une dispersion de MXène ;
(2) le mélange de la dispersion de conducteur ionique rapide et de la dispersion de MXène obtenues à l'étape (1) pour obtenir une solution mélangée ; et
(3) le mélange du matériau actif de cathode avec la solution mélangée obtenue à l'étape (2), et ensuite, un séchage pour obtenir le matériau de cathode composite,
dans lequel le matériau actif de cathode est sélectionné parmi le groupe consistant en LiFePO₄, LiNi_{0,5}Co_{0,3}Mn_{0,2}O₂, LiNi_{0,6}Co_{0,2}Mn_{0,2}O₂, et LiNi_{0,8}Co_{0,1}Mn_{0,1}O₂,
le conducteur ionique rapide dans le conducteur ionique rapide revêtu d'un MXène est sélectionné parmi le groupe consistant en Li_{6,4}La₃Zr_{1,4}Ta_{0,6}O₁₂, Li₃PO₄, Li_{1,4}Al_{0,4}Ti_{1,6}(PO₄)₃, LiTi_{0,5}Zr_{1,5}(PO₄)₃, et Li₂AlZr(PO₄)₃, et
le MXène dans le conducteur ionique rapide revêtu d'un MXène est Ti₃C₂Tₓ, où Tₓ représente un groupe fonctionnel sélectionné parmi le groupe consistant en -F, -O et -OH.

5. Procédé selon la revendication 4, dans lequel à l'étape (1), la dispersion de conducteur ionique rapide et la dispersion de MXène présentent indépendamment une concentration massique de 1 mg/mL à 100 mg/mL.

6. Procédé selon la revendication 4 ou 5, dans lequel le solvant organique de l'étape (1) est sélectionné parmi le groupe consistant en l'éthanol absolu, la *N*-méthylpyrrolidone (NMP), le *N*,*N*-diméthylformamide (DMF), le *N*,*N*-diméthylacétamide (DMA) et le diméthylsulfoxyde (DMSO).

7. Batterie au lithium-ion à l'état solide (SSLIB), dans laquelle un matériau de cathode dans la SSLIB est le matériau de cathode composite selon l'une quelconque des revendications 1 à 3 ou le matériau de cathode composite préparé par le procédé selon l'une quelconque des revendications 4 à 6.
